# FASCICULE DE BREVET EUROPEEN

(11) **EP 2 244 944 B1**
(45) Date de publication et mention de la délivrance du brevet: **09.01.2019**
(21) Numéro de dépôt: 09720756.7
(22) Date de dépôt: 27.02.2009
(51) Int. Cl.: B64D 27/26, F02C 7/20

(54) **ENSEMBLE MOTEUR POUR AERONEF COMPRENANT DES ATTACHES MOTEUR DEPORTEES VERS LE BAS SUR LE CARTER DE SOUFFLANTE**
FLUGZEUGTRIEBWERKANORDNUNG MIT ABWÄRTS VERSETZTEN TRIEBWERKHALTERUNGEN AUF DEM LÜFTERGEHÄUSE
AIRCRAFT ENGINE ASSEMBLY COMPRISING DOWNWARDLY OFFSET ENGINE MOUNTS ON THE FAN CASING

(30) Priorité: 28.02.2008 FR 0851280
(43) Date de publication de la demande: 03.11.2010
(73) Titulaire: AIRBUS OPERATIONS, 31060 Toulouse (FR)
(72) Inventeur: JOURNADE, Frédéric, F-31100 Toulouse (FR); LAFONT, Laurent, F-31320 Pechbusque (FR); JALBERT, Delphine, F-31840 Seilh (FR)
(74) Mandataire: Ilgart, Jean-Christophe
(86) Numéro de dépôt international: PCT/FR2009/050320
(87) Numéro de publication internationale: WO 2009/112777

(56) Documents cités:
- FR-A- 2 295 876
- FR-A- 2 900 907
- GB-A- 2 275 308

## Description

La présente invention se rapporte de façon générale à un ensemble moteur pour aéronef, du type comprenant un turboréacteur, une nacelle enveloppant le turboréacteur, ainsi qu'un mât d'accrochage pourvu d'une structure rigide et d'une pluralité d'attaches moteur interposées entre une structure rigide du mât d'accrochage et le turboréacteur.

Le mât d'accrochage, également appelé « EMS » (de l'anglais « Engine Mounting Structure »), permet de suspendre le turboréacteur au-dessous de la voilure de l'aéronef, ou bien de monter ce turboréacteur au-dessus de cette même voilure, ou bien encore de le rapporter en partie arrière du fuselage. Il est en effet prévu pour constituer l'interface de liaison entre un turboréacteur et une partie structurale donnée de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

La nacelle est quant à elle classiquement équipée de plusieurs capots enveloppant le turboréacteur et permettant un accès à ce dernier en position ouverte, ces capots étant connus sous les dénominations de capots de soufflante et de capots d'inverseur de poussée.

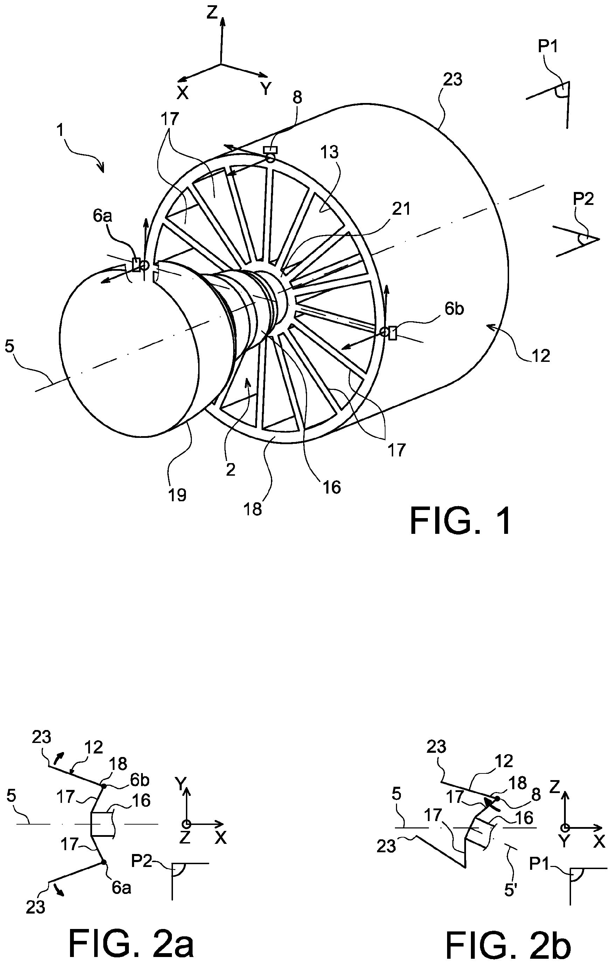

De façon plus précise, sur certains ensembles moteurs de l'art antérieur comme celui décrit dans le document FR 2 900 907, il est prévu un mât d'accrochage disposant d'une structure rigide comportant un caisson longitudinal ainsi que deux caissons latéraux solidaires du caisson longitudinal et agencés de part et d'autre de celui-ci, le mât comprenant également des moyens d'accrochage du turboréacteur sur la structure rigide, ces moyens comportant une première, seconde et troisième attaches moteur avant de reprise des efforts de poussée rapportées sur le carter de soufflante. Comme le montre schématiquement la figure 1 illustrant une réalisation de l'art antérieur dans laquelle le moteur est destiné à être suspendu sous l'aile de l'aéronef, les trois attaches moteur avant reprenant les efforts de poussée sont agencées de sorte que la troisième attache moteur avant 8 passe par un plan diamétral P1 du turboréacteur, ici le plan de symétrie vertical du turboréacteur, tandis que les première et seconde attaches moteur 6a, 6b, respectivement destinées à être rapportées sur les deux caissons latéraux du mât, sont quant à elles disposées de part et d'autre de ce plan diamétral P1, et habituellement traversées par un autre plan diamétral P2 du turboréacteur, orthogonal au plan diamétral précité et correspondant ici au plan de symétrie horizontal du turboréacteur. Il est noté que cette disposition particulière, dans laquelle les points d'ancrage des première et seconde attaches moteurs sur le carter de soufflante sont diamétralement opposées sur ce dernier, est retenue afin de privilégier le passage des efforts de poussée par ces deux attaches, les efforts transitant par la troisième attache restant largement plus faibles, voire nuls. Cela permet d'éviter de créer un déport du plan privilégié de reprise des efforts de poussée constitué par ces deux attaches diamétralement opposées, par rapport à l'axe moteur, et donc limite fortement l'introduction d'un couple réputé néfaste, susceptible de s'exercer selon la direction transversale du turboréacteur et de déformer le carter moteur.

Le turboréacteur comprend de façon classique un carter de soufflante 12, un carter intermédiaire 21 situé radialement vers l'intérieur par rapport au carter de soufflante et relié à ce dernier par une pluralité de bras structuraux 17, de préférence orientés radialement, ainsi qu'un carter central 16, également dit carter « core », prolongeant le carter intermédiaire 21 vers l'arrière. Enfin, il est noté que le carter central s'étend jusqu'à une extrémité arrière 19 de plus grande dimension, également dénommée carter d'éjection.

Les trois attaches moteur 6a, 6b, 8 étant rapportées fixement sur le carter de soufflante 12, et plus préférentiellement sur une extrémité périphérique arrière 18 de celui-ci, ce carter 12 est donc sollicité lors d'une poussée axiale générée par le turboréacteur, au même titre que les bras structuraux 17. Lors d'une telle sollicitation, le carter de soufflante est tout à fait capable de faire transiter les efforts axiaux, également dits efforts longitudinaux, même dans les portions de ce carter situées entre deux bras structuraux directement consécutifs dans la direction circonférentielle.

Cependant, il a été constaté que dans le plan privilégié P2 de reprise des efforts de poussée, les bras structuraux sont soumis à des contraintes importantes se traduisant par une mise en flexion, néfaste pour le moteur. En effet, comme cela est schématisé sur la figure 2a, dans le plan diamétral P2 intégrant les attaches moteur 6a, 6b reprenant l'essentiel des efforts de poussée, les bras structuraux 17 ont tendance à fléchir, en voyant leurs extrémités radiales extérieures basculer vers l'arrière. Cette flexion des bras 17 vers l'arrière est à l'origine d'une déformation du carter de soufflante 12, qui a tendance à « s'ouvrir », comme en témoigne l'écartement de l'extrémité périphérique avant 23, par rapport à l'axe moteur 5, dans le plan P2. Pour compenser cette ouverture, l'extrémité périphérique avant 23 a tendance à se « fermer » ou se « pincer » dans le plan diamétral orthogonal P1, d'où il en ressort globalement une ovalisation du carter, avec pour grand axe celui passant par les première et seconde attaches moteur 6a, 6b.

Ainsi, la déformation du carter de soufflante, décrite ci-dessus, crée des jeux importants entre l'extrémité des pales de soufflante et ce même carter, jeux qui sont réputés néfastes à la performance globale du moteur.

Comme mentionnés ci-dessus, les efforts de poussée passent de façon privilégiée par les première et seconde attaches moteur du plan P2, la troisième attache moteur étant quant à elle seulement sollicitée dans des niveaux d'intensités beaucoup plus faibles, voire nuls. Cependant, cette troisième attache moteur bloque tout déplacement du moteur en fonctionnement. En raison de ce blocage, la déformée du carter moteur dans le plan P1 se traduit, relativement au mât, par une rotation de l'ensemble du moteur autour de cette troisième attache.

Dans le cas décrit ci-dessus, la rotation autour de l'attache 8 a tendance à faire pivoter la partie arrière du turboréacteur vers le bas, comme en témoigne la figure 2b, sur laquelle les niveaux de déformation ont volontairement été exagérés pour des raisons de clarté, comme cela est également le cas sur la figure 2a.

D'une façon plus générale, la déformation que subit le turboréacteur, et donc le carter central 16, provoque un déplacement de son extrémité arrière dans un sens opposé à celui où se trouve la troisième attache moteur.

A cet égard, il est noté que le déplacement du carter central peut s'avérer problématique vis-à-vis de son intégration dans la partie arrière du mât et/ou de la nacelle.

L'invention a donc pour but de proposer un ensemble moteur pour aéronef remédiant au moins partiellement aux problèmes mentionnés ci-dessus, relatifs aux réalisations de l'art antérieur.

Pour ce faire, l'invention a pour objet un ensemble moteur pour aéronef comprenant :
- un turboréacteur comprenant un carter de soufflante, un carter intermédiaire situé radialement vers l'intérieur par rapport au carter de soufflante et relié à ce dernier par une pluralité de bras structuraux, de préférence orientés radialement, ainsi qu'un carter central prolongeant ledit carter intermédiaire vers l'arrière ;
- un mât d'accrochage disposant d'une structure rigide comportant un caisson longitudinal ainsi que deux caissons latéraux solidaires dudit caisson longitudinal et agencés de part et d'autre de celui-ci, le mât comprenant également des moyens d'accrochage dudit turboréacteur sur la structure rigide, lesdits moyens d'accrochage comportant une première, seconde et troisième attaches moteur avant de reprise des efforts de poussée rapportées sur le carter de soufflante, et agencées de sorte que ladite troisième attache moteur avant passe par un premier plan diamétral du turboréacteur, lesdites première et seconde attaches moteur avant, respectivement rapportées sur les deux caissons latéraux, étant disposées de part et d'autre de ce premier plan diamétral.

Selon l'invention, lesdites première et seconde attaches moteur avant sont rapportées sur le carter de soufflante respectivement en deux points situés au-delà d'un second plan diamétral du turboréacteur orthogonal au premier plan diamétral, par rapport à ladite troisième attache moteur avant.

L'originalité de l'invention réside donc le fait de déporter les première et seconde attaches moteur par rapport à leur position diamétrale antérieurement adoptée, le déport étant réalisé de manière à les éloigner de ladite troisième attache moteur. Avec une telle configuration, lors d'une poussée axiale du turboréacteur, il est observé un déport, par rapport à l'axe moteur, du plan de reprise des efforts de poussée intégrant les première et seconde attaches moteur. Ainsi, du fait du déport adopté, ce plan de reprise est moins privilégié qu'il ne l'était dans les solutions antérieures décrites ci-dessus, de sorte que les efforts de poussée se répartissent de façon plus homogène à travers les trois attaches moteur précitées. En d'autres termes, la troisième attache moteur traversée par le premier plan diamétral est plus sollicitée, puisqu'elle reprend des efforts de poussée plus importants. Il en résulte avantageusement une baisse des contraintes dans les bras structuraux situés dans et à proximité du second plan diamétral, et, de manière plus générale, une sensible homogénéisation des contraintes dans l'ensemble des bras structuraux entourant le carter intermédiaire. Par conséquent, le carter de soufflante devient lui-même contraint de façon plus homogène sur son pourtour, ce qui limite fortement l'effet d'ovalisation rencontré dans l'art antérieur avec des première et seconde attaches moteur diamétralement opposées. Ceci se traduit par un meilleur rendement de la soufflante, et donc par un meilleur rendement global du turboréacteur.

En outre, la diminution de la déformée du carter de soufflante et des bras structuraux induit à son tour une diminution du déplacement vertical relatif de ce carter de soufflante vis-à-vis du mât. Il en résulte donc une limitation du déplacement du carter central, qui peut mieux s'intégrer dans la partie arrière du mât et/ou de la nacelle.

Naturellement, le positionnement des première et seconde attaches moteur sous le second plan diamétral peut être ajusté en fonction de la conception de l'ensemble moteur associé, ce positionnement pouvant donc évoluer en fonction des aéronefs concernés.

De préférence, lesdites première et seconde attaches moteur avant de reprise des efforts de poussée sont situées de façon symétrique par rapport audit premier plan diamétral défini par un axe longitudinal du turboréacteur parallèle à une direction longitudinale de celui-ci, et une première direction dudit turboréacteur orthogonale à la direction longitudinale.

Toujours préférentiellement, en vue de face prise selon un axe longitudinal du turboréacteur, il est fait en sorte qu'un angle ayant comme centre l'axe longitudinal du turboréacteur, entre les points d'ancrage de la troisième et de la première attache moteur soit strictement supérieur à 90° et inférieur ou égal à 120°, et encore plus préférentiellement compris entre 90 et 110° non-inclus, voire entre 90 et 100° non-inclus, de même qu'un angle ayant comme centre l'axe longitudinal du turboréacteur, entre les points d'ancrage de la troisième et de la seconde attache moteur soit supérieur ou égal à 240° et inférieur strictement à 270°, et encore plus préférentiellement compris entre 250 et 270° non-inclus, voire entre 260 et 270° non-inclus. Les intervalles le plus préférentiels permettent d'obtenir une solution très satisfaisante, dans laquelle l'implantation des première et seconde attaches n'est aucunement problématique, et dans laquelle le turboréacteur offre des performances satisfaisantes.

De préférence, lesdites première et seconde attaches moteur avant sont chacune conçues de manière à reprendre des efforts s'exerçant selon la direction longitudinale et selon ladite première direction du turboréacteur, et ladite troisième attache moteur avant est conçue de manière à reprendre des efforts s'exerçant selon la direction longitudinale et selon une seconde direction du turboréacteur, orthogonale à ladite première direction et à la direction longitudinale.

A titre indicatif, il est noté que dans les cas où le turboréacteur est destiné à être monté au-dessus de la voilure de l'aéronef ou suspendu au-dessous de celle-ci, les première et seconde directions orthogonales entre elles et orthogonales à la direction longitudinale sont préférentiellement les directions verticale et transversale du turboréacteur, respectivement. En revanche, bien que cela puisse également être le cas dans le cadre de l'accrochage de l'ensemble moteur en partie arrière du fuselage de l'aéronef, il se peut que les première et seconde directions soient chacune inclinées par rapport aux directions verticale et transversale du turboréacteur.

Dans cette configuration, lesdits moyens d'accrochage sont uniquement constitués par les attaches avant précitées, fixées au carter de soufflante du turboréacteur, et formant un système de reprise isostatique. D'une façon plus générale, on fait en sorte que les seuls moyens d'accrochage fixés au carter de soufflante soient lesdites première, seconde et troisième attaches moteur, même dans d'autres cas où une attache moteur additionnelle est prévue entre la structure rigide du mât et le carter central, toujours de manière à former un système de reprise isostatique.

De préférence, comme évoqué ci-dessus, ladite première direction du turboréacteur correspond à une direction verticale de celui-ci, et ladite seconde direction du turboréacteur correspond à une direction transversale de celui-ci.

Dans un mode réalisation préféré mais non revendiqué, la peau extérieure de fermeture de caisson de chacun des deux caissons latéraux constitue une partie de la surface aérodynamique extérieure de la nacelle. En d'autres termes, cela revient à prévoir qu'une partie de la surface aérodynamique extérieure de la nacelle soit constituée par des peaux travaillantes, susceptibles de reprendre des efforts provenant du turboréacteur. Par ailleurs, en prévoyant préférentiellement un ou plusieurs capots de nacelle montés sur les caissons latéraux, il est alors avantageusement possible de former une enveloppe tout autour d'une portion donnée du turboréacteur, à l'aide des éléments précités.

Selon un autre mode de réalisation préféré, l'ensemble moteur comprend en outre une structure annulaire de transfert d'efforts entourant le carter central et relié mécaniquement à ce dernier par l'intermédiaire de moyens de montage, et, à chacune desdites première et seconde attaches moteur avant est associée une structure de renfort formant plan de cisaillement, raccordée fixement :
- au niveau de la structure annulaire en un premier point d'ancrage ;
- au niveau du carter de soufflante en un second point d'ancrage ; et
- au niveau d'un bras structural ou du carter intermédiaire en un troisième point d'ancrage,
ladite structure s'étendant selon un plan fictif, de préférence radial, parallèle à un axe longitudinal dudit turboréacteur ou passant par celui-ci, et passant également par le point d'ancrage de ladite attache moteur avant sur le carter de soufflante.

Tout d'abord, la présence de ces structures de renfort sollicitées en cisaillement permet de rigidifier le turboréacteur dans les deux plans fictifs précités, impliquant une limitation de la flexion du carter central et du carter intermédiaire, même en cas de sollicitations inertielles dans ces plans. Les performances globales de l'ensemble moteur s'en trouvent améliorées.

Par ailleurs, cette adjonction des structures de renfort procure une rigidification des bras structuraux dans et à proximité des deux plans fictifs précités, c'est-à-dire là où les bras sont traditionnellement les plus sollicités. Par conséquent, le carter de soufflante étant relié rigidement à ces bras, cela limite encore davantage l'effet d'ovalisation décrit ci-dessus. Ceci se traduit par un meilleur rendement de la soufflante, et donc par un meilleur rendement global du turboréacteur.

Dans un mode réalisation préféré mais non revendiqué, ledit troisième point d'ancrage se situe au niveau d'une jonction entre ledit carter intermédiaire et un bras structural, même si il pourrait être placé sur l'un ou l'autre de ces éléments, sans sortir du cadre de l'invention.

Dans un mode réalisation préféré mais non revendiqué, chaque structure de renfort prend la forme générale d'un triangle, plein ou troué pour un gain de masse. A cet égard, la forme triangulaire se révèle adaptée pour permettre la formation d'un plan de cisaillement.

Toujours de manière préférentielle, à ladite troisième attache moteur avant est associée une structure de renfort formant plan de cisaillement, raccordée fixement :
- au niveau de la structure annulaire en un premier point d'ancrage ;
- au niveau du carter de soufflante en un second point d'ancrage ; et
- au niveau d'un bras structural ou du carter intermédiaire en un troisième point d'ancrage,
ladite structure s'étendant selon un plan fictif, de préférence sensiblement radial, parallèle à l'axe longitudinal dudit turboréacteur ou passant par celui-ci, et passant également par un point d'ancrage de ladite troisième attache moteur avant sur le carter de soufflante.

Avec cette configuration, dans laquelle le plan fictif concerné correspond de préférence au premier plan diamétral précité, le carter central est davantage rigidifié, et mieux capable de résister aux sollicitations inertielles appliquées dans ce plan.

Toujours de manière préférentielle, lesdites structures de renfort sont dépourvues de raccordement mécanique direct avec ledit mât, ce qui permet d'éviter d'introduire des efforts additionnels dans ce dernier. Les moyens d'accrochage précités peuvent de ce fait rester isostatiques, malgré la présence des structures de renfort. A titre indicatif, pour des raisons identiques, on fait également en sorte que lesdites structures de renfort sont dépourvues de raccordement mécanique direct avec la nacelle de l'ensemble moteur concerné.

Par ailleurs, l'invention peut comprendre une structure annulaire de transfert d'efforts entourant le carter central et relié mécaniquement à ce dernier par l'intermédiaire de moyens de montage comprenant une pluralité de bielles de raccordement, ladite structure annulaire étant par ailleurs raccordée à une pluralité de structures agencées extérieurement par rapport à celle-ci, comme par exemple les structures de renfort décrites ci-dessus, ces structures la sollicitant radialement respectivement en une pluralité de points d'introduction d'efforts répartis circonférentiellement sur cette dernière.

Dans un tel cas, au moins une bielle de raccordement est associée à chacun des points d'introduction d'efforts, ladite bielle étant, en vue de face selon un axe longitudinal du turboréacteur, disposée tangentiellement par rapport au carter central, et présentant une extrémité intérieure raccordée sur ce carter central, ainsi qu'une extrémité extérieure raccordée sur ladite structure annulaire de manière à être traversée par un plan fictif radial passant par l'axe longitudinal dudit turboréacteur, et également par ledit point d'introduction d'efforts.

Alternativement, les structures pourraient ne pas être radiales, mais plus généralement sensiblement planes, préférentiellement parallèles à l'axe longitudinal du turboréacteur, en restant néanmoins toujours chacune intégrée au plan fictif passant par ledit point d'introduction d'efforts et l'extrémité extérieure de la bielle associée.

Cette configuration présente l'avantage de placer, en vue de face, chaque point d'introduction d'efforts et l'extrémité extérieure de la bielle de raccordement dans un même plan fictif, donc de préférence radial, dans lequel se trouve également agencé l'effort radial introduit dans la structure annulaire, par la structure extérieure associée au point d'introduction d'efforts concerné. Par conséquent, l'effort radial précité est repris conjointement par un effort de compression ou de traction dans la bielle, ainsi que par un effort nécessairement sensiblement tangentiel dans la structure annulaire, également dit effort de membrane. De ce fait, au niveau de chacun des points d'introduction d'efforts de la structure annulaire, celle-ci tend à répondre aux sollicitations mécaniques des structures extérieures par un effort sensiblement tangentiel, limitant fortement ses déformations, et l'empêchant en particulier de « s'ovaliser ».

Par ailleurs, les bielles de raccordement étant disposées tangentiellement par rapport au carter central sur lequel elles sont raccordées, les déformations de ce carter sont également fortement limitées.

Cette configuration prévoit donc globalement de fournir une jonction mécanique mieux optimisée entre la structure annulaire et le carter central, permettant d'assurer une reprise satisfaisante des efforts transitant par les structures extérieures raccordées à la structure annulaire.

De préférence, lesdites bielles de raccordement s'étendent toutes dans le même sens circonférentiel à partir de leur extrémité extérieure. Avec cette configuration, en cas de dilatation thermique différentielle entre l'anneau et le carter ou les bielles, l'anneau peut avantageusement tourner autour du carter central, tout en restant coaxial à celui-ci.

De préférence, lesdites bielles de raccordement sont disposées sensiblement dans un même plan transversal du turboréacteur.

Toujours préférentiellement, afin d'autoriser au mieux la dilatation thermique du carter central par rapport à la structure annulaire qui l'entoure, lesdites bielles de raccordement présentent des extrémités intérieure et extérieure montées de façon rotulée.

De préférence, comme évoqué précédemment, les structures extérieures sont constituées par les structures de renfort décrites ci-dessus. Ainsi, à chacune desdites première, seconde et troisième attaches moteur avant est associée une structure de renfort formant plan de cisaillement, raccordée fixement :
- au niveau de la structure annulaire en un premier point d'ancrage formant point d'introduction d'effort dans ladite structure annulaire ;
- au niveau du carter de soufflante en un second point d'ancrage ; et
- au niveau d'un bras structural ou du carter intermédiaire en un troisième point d'ancrage,
ladite structure de renfort s'étendant donc selon ledit plan fictif radial passant par ledit point d'introduction d'effort, et également par un point d'ancrage de ladite attache moteur avant sur le carter de soufflante.

Il est noté que les structures de renfort formant plan de cisaillement jouent parfaitement leur rôle grâce à la non-déformation évoquée ci-dessus de la structure annulaire sur laquelle ils sont raccordés, par l'intermédiaire des points d'introduction d'efforts.

Un autre objet de la présente invention concerne un aéronef comprenant au moins un ensemble moteur tel que décrit ci-dessus, assemblé sur une aile ou sur une partie arrière de fuselage de cet aéronef.

D'autres avantages et caractéristiques de l'invention apparaîtront dans la description détaillée non limitative ci-dessous.

Cette description sera faite au regard des dessins annexés parmi lesquels ;
- les figures 1 à 2b, déjà décrites, représentent un ensemble moteur pour aéronef conforme à l'art antérieur ;
- la figure 3 représente une vue de côté d'un ensemble moteur pour aéronef, selon un mode de réalisation préféré de la présente invention ;
- la figure 4 représente une vue en perspective de l'ensemble représenté sur la figure 3, la structure rigide du mât d'accrochage et la nacelle ayant été retirées pour laisser plus clairement apparaître les attaches moteur ;
- la figure 5 représente une vue schématique de face correspondant à celle de la figure 4, illustrant le positionnement particulier des attaches moteur ;
- la figure 6 représente une vue partielle et agrandie en perspective du mât d'accrochage selon le mode de réalisation préféré ;
- la figure 7 représente une vue en coupe prise selon le plan transversal P' de la figure 6 ;
- la figure 8 représente une vue en perspective d'un mât d'accrochage appartenant à un ensemble moteur pour aéronef selon un autre mode de réalisation préféré de la présente invention ;
- la figure 9 représente une vue en coupe prise selon le plan transversal P' de la figure 8, traversant la structure rigide du mât d'accrochage ;
- la figure 10 représente une vue en coupe transversale, selon un autre mode de réalisation préféré dans lequel le turboréacteur intègre des structures de renfort reliant le carter de soufflante au carter central, cette figure correspondant également à une vue en coupe prise le long de la ligne X-X de la figure 11 ;
- la figure 11 représente une vue en coupe prise le long de la ligne XI-XI de la figure 10 ;
- la figure 12 représente une vue en coupe prise le long de la ligne XII-XII de la figure 10 ;
- la figure 13 représente une vue en coupe transversale schématisant les moyens de montage rapportés entre la structure annulaire de transfert d'efforts, et le carter central du turboréacteur ;
- la figure 13a représente une vue similaire à celle de la figure 13, les moyens de montage se trouvant sous une forme alternative de réalisation ;
- la figure 14 représente une vue partielle et agrandie de celle montrée sur la figure 13, schématisant la répartition des efforts sur la structure annulaire, au niveau d'un point d'introduction d'efforts ; et
- la figure 15 représente un autre mode de réalisation préféré, correspondant à une vue en coupe prise le long de la ligne XV-XV de la figure 13.

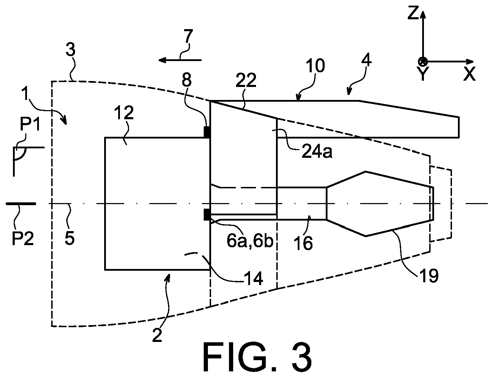

En référence à la figure 3, on voit un ensemble moteur 1 pour aéronef selon un mode de réalisation préféré de la présente invention, cet ensemble 1 étant destiné à être fixé sous une aile d'aéronef (non représentée).

Globalement, l'ensemble moteur 1, également appelé système propulsif intégré, est composé d'un turboréacteur 2, d'une nacelle 3 (montrée en pointillés pour des raisons clarté), et d'un mât d'accrochage 4 pourvu de moyens d'accrochage du turboréacteur sur ce mât, ces moyens étant de préférence constitués d'une pluralité d'attaches moteur 6a, 6b, 8, rapportées fixement sur une structure rigide 10 du mât d'accrochage (l'attache 6b étant masquée par l'attache 6a sur cette figure 3). A titre indicatif, il est noté que l'ensemble 1 comporte une autre série d'attaches (non représentées) permettant d'assurer la suspension de cet ensemble 1 sous la voilure de l'aéronef.

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 3, on peut voir que seules les attaches moteur 6a, 6b, 8 et la structure rigide 10 du mât d'accrochage 4 ont été représentées. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, le turboréacteur 2 dispose d'une conception identique ou similaire à celle montrée sur la figure 1, à savoir comprenant à l'avant un carter de soufflante 12 de grande dimension délimitant un canal annulaire de soufflante 14, un carter intermédiaire 21 et des bras structuraux 17 (non représentés sur la figure 3), également dits aubages directeurs de sortie, ainsi qu'un carter central 16 disposant d'une extrémité arrière 19.

Comme cela ressort de ce qui précède, il s'agit ici préférentiellement d'un turboréacteur disposant d'un fort taux de dilution.

Comme on peut l'apercevoir sur la figure 3, une première attache moteur avant 6a ainsi qu'une seconde attache moteur avant 6b sont toutes deux destinées à être fixées sur le carter de soufflante 12, de façon symétrique par rapport à un plan P1 dit premier plan diamétral défini par l'axe 5 et la direction Z, ce plan vertical P1 traversant une troisième attache moteur avant 8 également fixée sur le carter de soufflante 12, les trois attaches étant de préférence toutes traversées par un plan orthogonal à l'axe 5.

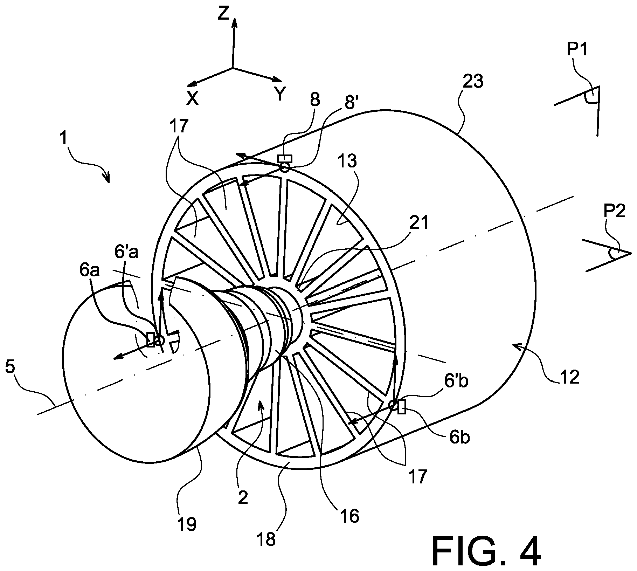

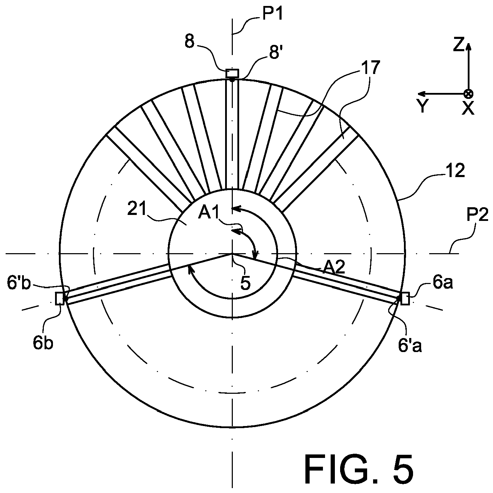

En référence à présent à la figure 4, on peut voir que la première attache 6a et la seconde attache 6b représentées schématiquement sont effectivement disposées de façon symétrique par rapport au premier plan diamétral P1 du turboréacteur, et de préférence agencées toutes les deux sur une partie annulaire périphérique du carter de soufflante 12, et plus précisément sur l'arrière de cette même partie. Plus précisément, elles sont disposées sous un plan P2 dit second plan diamétral du turboréacteur, qui est orthogonal au premier, et donc horizontal. Les deux points de raccordement 6'a et 6'b de ces attaches 6a, 6b sur le carter 12 sont donc situés de manière à ce que le second plan P2 soit disposé entre d'une part ces deux points 6'a et 6'b, et d'autre part un point de raccordement 8' de l'attache moteur 8 sur ce même carter, en vue de face selon l'axe 5, comme celle de la figure 5.

Sur cette figure en vue selon l'axe 5, on peut voir qu'un angle A1 ayant comme centre cet axe longitudinal 5, entre les points d'ancrage 8' et 6'a de la troisième et de la première attache moteur, est strictement supérieur à 90° et de préférence compris entre 90 et 110° non-inclus. De manière analogue, un angle A2 ayant comme centre cet axe longitudinal 5, entre les points d'ancrage 8' et 6'b de la troisième et de la seconde attache moteur, est strictement inférieur à 270°, et de préférence compris entre 250 et 270° non-inclus.

Comme évoqué ci-dessus, cette disposition des attaches 6a, 6b permet de solliciter davantage l'attache moteur 8, et donc de limiter les effets parasites d'ovalisation du carter de soufflante rencontrés dans les réalisations de l'art antérieur. De plus, elle permet de contrer/compenser le couple d'axe parallèle à la direction Y, s'exerçant sur le turboréacteur, résultant des efforts axiaux transitant par cette même troisième attache 8.

A titre indicatif, il est noté que les attaches moteur 6a, 6b, 8 sont réalisées de manière conventionnelle, par exemple du type intégrant des ferrures et des axes, les points d'ancrage / de raccordement précités 6'a, 6'b, 8' correspondant aux points de contact entre la structure de ces attaches et la structure du carter de soufflante.

Comme cela est montré schématiquement par les flèches de la figure 4, chacune des première et seconde attaches moteur avant 6a, 6b est conçue de manière à pouvoir reprendre des efforts générés par le turboréacteur 2 selon la direction X et selon la direction Z, mais pas ceux s'exerçant selon la direction Y.

De cette manière, les deux attaches 6a, 6b éloignées l'une de l'autre assurent conjointement la reprise du moment s'exerçant selon la direction X, et celle du moment s'exerçant selon la direction Z. Toujours en référence à la figure 4, on peut voir que la troisième attache avant 8, située sur la partie la plus haute du carter de soufflante 12, donc sur la partie la plus haute de la partie annulaire périphérique, est conçue de manière à pouvoir reprendre des efforts générés par le turboréacteur 2 selon la direction X et selon la direction Y, mais pas ceux s'exerçant selon la direction Z. De cette manière, cette troisième attache 8 assure conjointement avec les attaches 6a, 6b la reprise du moment s'exerçant selon la direction Y.

L'avantage de cette configuration non limitative réside dans le fait que toutes les attaches moteur sont montées sur le carter de soufflante, de sorte que le flux secondaire n'est aucunement perturbé par ces attaches, entraînant ainsi un gain significatif en termes de performances globales du moteur. De plus, les trois attaches forment ensemble un système de reprise isostatique.

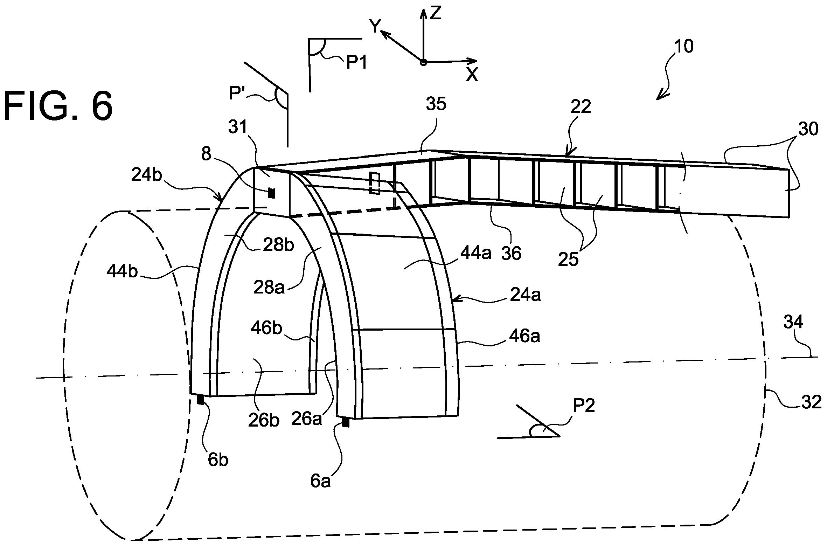

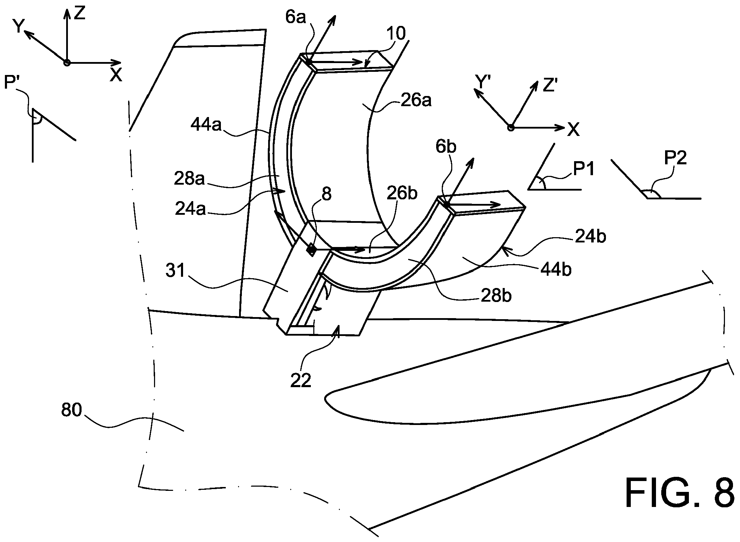

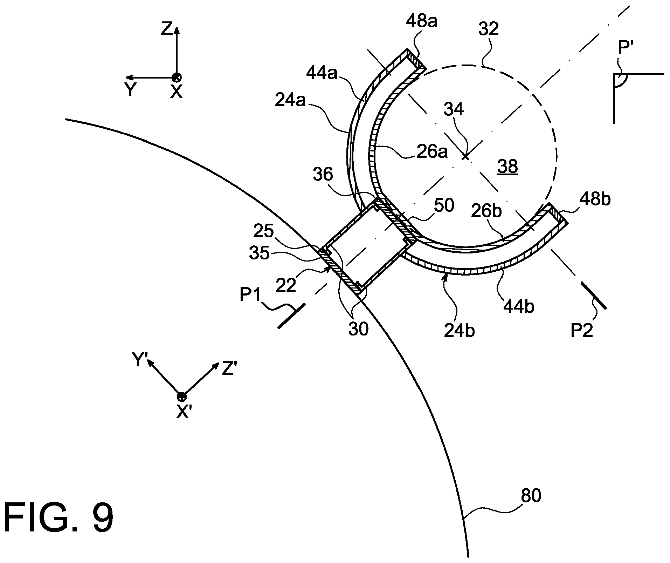

En référence à présent à la figure 6, on voit un exemple de réalisation de la structure rigide 10 du mât d'accrochage 4. Tout d'abord, il est indiqué que cette structure rigide 10, également appelée structure primaire, est de préférence conçue de manière à présenter une symétrie par rapport au plan diamétral P1 indiqué ci-dessus, c'est-à-dire par rapport au plan vertical défini par l'axe longitudinal 5 du turboréacteur 2, et la direction Z. A titre indicatif, cela est généralement le cas lorsque le moteur est suspendu ou monté au-dessus de la voilure, mais pas nécessairement rencontré lorsqu'il est assemblé à l'arrière du fuselage. En effet, dans ce dernier cas qui sera détaillé en référence aux figures 8 et 9, la structure rigide 10 peut présenter un plan de symétrie autre en fonction de son orientation par rapport au fuselage arrière, par exemple un plan de symétrie sensiblement horizontal ou incliné par rapport à l'horizontale, ou bien encore ne présenter aucun plan de symétrie. Cela se produit notamment lorsque les deux caissons latéraux qui seront décrits ci-après, solidaires et disposés de part et d'autre d'un caisson longitudinal dit caisson central, ne présentent pas une même longueur circonférentielle.

Ainsi, la structure rigide 10 comporte un caisson longitudinal 22, dit caisson central longitudinal, et également appelé caisson de torsion, qui s'étend d'un bout à l'autre de la structure 10 dans la direction X, parallèlement à cette même direction. A titre indicatif, ce caisson 22 peut être formé par l'assemblage de deux longerons ou panneaux latéraux 30 s'étendant selon la direction X dans des plans XZ parallèles, et raccordés entre eux par l'intermédiaire de nervures transversales 25 qui sont quant à elles orientées dans des plans YZ parallèles. En outre, un longeron supérieur 35 et un longeron inférieur 36 sont également prévus pour fermer le caisson 22.

Deux caissons latéraux 24a, 24b viennent compléter la structure rigide 10 dont le caisson central 22 se situe au niveau d'une portion supérieure de cette même structure 10, chacun des deux caissons 24a, 24b étant solidaire du caisson central de torsion 22 et faisant saillie de part et d'autre de celui-ci selon la direction Y, et vers le bas. A titre indicatif, il est noté que les caissons 22, 24a, 24b pourraient être réalisés de manière à ne former qu'un seul et unique caisson, sans sortir du cadre de l'invention.

De préférence, ces caissons latéraux rapportés solidairement de part et d'autre à l'avant du caisson central 22, présentent chacun une peau intérieure de fermeture de caisson 26a, 26b, également dite peau inférieure, orientée vers le turboréacteur et délimitant conjointement une partie d'une surface fictive 32 sensiblement cylindrique de section circulaire, et d'axe longitudinal 34 parallèle au caisson central 22 et à la direction X, comme cela est visible sur la figure 6.

En d'autres termes, ces deux peaux 26a, 26b disposent chacune d'au moins une partie avec une courbure adaptée pour pouvoir se positionner autour et au contact de cette surface fictive 32. On prévoit avantageusement que les peaux 26a, 26b participent alors à la délimitation radiale externe d'un canal annulaire de flux secondaire (non représenté), sachant qu'il est tout de même envisageable de prévoir un revêtement de protection acoustique sur ces mêmes peaux de fermeture, indifféremment sur leurs faces intérieures ou extérieures. Alternativement, il est possible de faire en sorte que les caissons latéraux soient entièrement situés au-dessus du carter de soufflante, sans sortir du cadre de l'invention.

A titre indicatif, il est précisé que l'axe 34 est de préférence confondu avec l'axe longitudinal 5 du turbopropulseur 2.

Par ailleurs, le caisson latéral 24a, ici identique et symétrique au caisson latéral 24b, comporte une peau extérieure de fermeture de caisson 44a, tandis que le caisson latéral 24a comporte lui aussi une peau extérieure de fermeture de caisson 44b.

Ces peaux extérieures de fermetures 44a, 44b, également appelées peaux supérieures, constituent de préférence chacune une partie de la surface aérodynamique extérieure de la nacelle, impliquant avantageusement qu'au moins une partie du mât fait partie intégrante de la nacelle.

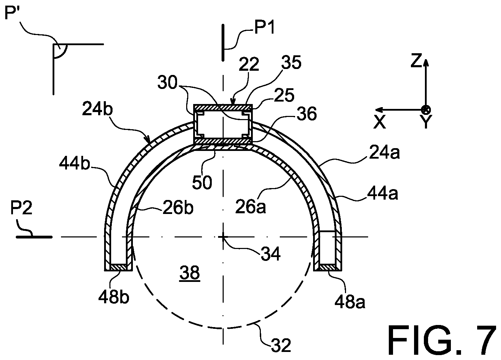

La figure 7 représente une vue en coupe prise selon un plan P' transversal traversant de façon quelconque les caissons latéraux 24a, 24b.

Sur cette figure, on peut effectivement voir que les deux peaux intérieures de fermeture de caisson 26a, 26b délimitent avec une partie de leur surface externe une partie de la surface fictive 32 sensiblement cylindrique de section circulaire. Il est noté que pour créer le moins de perturbation possible du flux secondaire s'échappant du canal annulaire de soufflante 14, le diamètre de la surface fictive cylindrique 32 est de préférence sensiblement identique au diamètre de la surface externe cylindrique de la partie annulaire du carter de soufflante 12. Cette spécificité va bien entendu dans le sens de celle visant à prévoir que les peaux 26a, 26b participent à la délimitation radiale externe de ce canal annulaire de flux secondaire.

D'autre part, comme on peut le voir sur la figure 7, les éléments du caisson central 22 ne font saillie que sur une très petite distance à l'intérieur de l'espace 38 délimité par la surface fictive 32, de sorte qu'ils ne perturbent pas non plus significativement l'écoulement du flux d'air secondaire. Cela s'explique notamment par le fait que les longerons latéraux 30 disposent d'une hauteur selon la direction Z qui est extrêmement petite par rapport au diamètre des surfaces fictive 32 et externe 18.

En référence conjointement aux figures 6 et 7, les peaux 26a, 44a sont raccordées l'une à l'autre par l'intermédiaire d'un cadre de fermeture avant 28a et d'un cadre de fermeture arrière 46a, ces cadres 28a, 46a étant donc orientés transversalement et situés respectivement à l'avant et à l'arrière du caisson 24a. En outre, une plaque de fermeture 48a située en dessous du plan P2 vient fermer une partie inférieure du caisson 24a, et relie donc l'extrémité inférieure des cadres 28a, 46a et des peaux 26a, 44a.

Naturellement, le caisson latéral 24b comporte des éléments 26b, 44b, 28b, 46b et 48b, respectivement identiques aux éléments 26a, 44a, 28a, 46a et 48a du caisson 24a, ces deux caissons étant par exemple susceptibles de porter, de préférence de manière articulée, des capots de la nacelle.

Les deux peaux 26a, 26b sont de préférence réalisées d'un seul tenant et reliées entre elles au niveau de leur partie supérieure par l'intermédiaire d'une plaque de jonction 50 orientée selon un plan XY, et située au contact du longeron inférieur 36 du caisson central 22. De façon analogue, on peut aussi prévoir que les deux cadres de fermeture avant 28a, 28b sont réalisés d'un seul tenant et reliés entre eux au niveau de leur partie supérieure par l'intermédiaire d'un cadre de fermeture avant 31 du caisson 22, ce cadre 31 étant orienté selon un plan YZ. Par conséquent, dans cette configuration, les cadres 28a, 28b, 31 réalisés d'un seul tenant sont donc agencés dans un même plan YZ, et constituent une extrémité avant de la structure rigide 10 du mât 4.

Ainsi, la structure rigide 10 du mât d'accrochage 4 est tout à fait adaptée pour supporter les attaches moteur avant 6a, 6b, 8, puisque celles-ci peuvent être facilement fixées sur la pièce transversale réalisée d'un seul tenant intégrant les cadres 28a, 28b et 31, comme montré sur la figure 1, et présentant par exemple une forme générale de U, tout comme l'ensemble de la structure rigide en vue de face.

Une solution alternative pourrait être envisagée, dans laquelle les caissons latéraux formeraient une barrique semi-cylindrique et non plus en U, des éléments structuraux additionnels étant alors prévus sous ces caissons, afin de déporter les première et seconde attaches moteur sous le second plan diamétral P2. Cette configuration est particulièrement intéressante dans le cadre d'une mise en place du turboréacteur sur le mât par un mouvement vertical, par le dessous.

A titre d'exemple indicatif, la totalité des éléments constitutifs de la structure rigide 10 qui vient d'être décrite est réalisée à l'aide de matériaux métalliques, tels que l'acier, l'aluminium, le titane, ou encore à l'aide de matériaux composites, de préférence en carbone.

Il est rappelé qui si les caissons latéraux 24a, 24b peuvent effectivement présenter une longueur circonférentielle différente, principalement dans le cas de l'accrochage de l'ensemble en partie arrière du fuselage, il est également précisé que dans ce dernier cas, ces caissons pourraient être rapportés sur le caisson central 22 à une autre position qu'en partie avant de celui-ci, sans sortir du cadre de l'invention.

A cet égard, en référence à présent aux figures 8 et 9, on voit la structure rigide 10 d'un mât d'accrochage appartenant à un ensemble moteur selon un autre mode de réalisation préféré de la présente invention, dont la particularité est d'être destinée à se rapporter en partie arrière d'un fuselage 80 de l'aéronef.

Cette structure rigide 10 dispose d'une conception sensiblement identique à celle décrite dans le mode de réalisation présenté ci-dessus, comme en témoignent les références numériques correspondant à des éléments identiques ou similaires à ceux décrits précédemment.

On peut apercevoir que la principale différence, résultant de l'accrochage en partie arrière du fuselage 80, réside dans l'inclinaison de cette structure rigide 10, dans la mesure où les deux caissons latéraux 24a, 24b forment à présent ensemble une portion d'une enveloppe/cage sensiblement cylindrique qui n'est plus située autour d'un demi-diamètre supérieur, mais agencée autour d'un demi-diamètre sensiblement latéral de ce même turboréacteur (non représenté).

Plus précisément, la structure rigide 10 est de préférence conçue de manière à présenter une symétrie par rapport au plan diamétral P1 qui n'est plus vertical, mais défini par l'axe longitudinal 5 du turboréacteur 2 et une première direction Z' orthogonale à la direction X, cette première direction Z' étant inclinée par rapport aux directions Z et Y précitées, correspondant respectivement aux directions verticale et transversale du turboréacteur. De préférence, ce plan P1 peut être tel qu'il monte en s'écartant du fuselage 80, d'un angle par exemple compris entre environ 10° et 60° par rapport à l'horizontale, c'est-à-dire par rapport à un plan XY quelconque.

La première attache moteur avant 6a ainsi que la seconde attache moteur avant 6b sont toutes deux destinées à être fixées sur le carter de soufflante, de façon symétrique par rapport au plan P1 défini ci-dessus, comme le montre la figure 8. On prévoit alors que les première et seconde attaches moteur avant 6a, 6b sont disposées au-delà du plan diamétral P2 orthogonal à P1, vis-à-vis de l'attache 8. Ici encore, cela se résume par le fait que le plan diamétral P2 se situe entre d'une part les deux attaches 6a, 6b, et d'autre part l'attache moteur 8.

Ici, le plan P2 est défini par l'axe longitudinal 5 et une seconde direction Y' orthogonale à la direction X et à la première direction Z', de sorte qu'il est donc également incliné par rapport aux directions Z et Y.

Comme cela est montré schématiquement par les flèches de la figure 8, chacune des première et seconde attaches moteur avant 6a, 6b est conçue de manière à pouvoir reprendre des efforts générés par le turboréacteur 2 selon la direction X et selon la première direction Z', mais pas ceux s'exerçant selon la direction Y'.

De cette manière, les deux attaches 6a, 6b fortement éloignées l'une de l'autre assurent conjointement la reprise du moment s'exerçant selon la direction X, et celle du moment s'exerçant selon la direction Z'.

Toujours en référence à la figure 8, on peut voir une troisième attache moteur avant 8 représentée schématiquement et aussi destinée à être fixée sur la partie annulaire périphérique du carter de soufflante (non représenté), également de préférence sur l'arrière de cette partie. En ce qui concerne cette troisième attache avant 8, traversée fictivement par le plan P1 indiqué ci-dessus, elle est conçue de manière à pouvoir reprendre uniquement des efforts générés par le turboréacteur 2 selon la direction X et selon la direction Y', et donc pas ceux s'exerçant selon la directions Z'.

De cette manière, cette troisième attache 8, assure conjointement avec les deux autres attaches 6a, 6b la reprise du moment s'exerçant selon la seconde direction Y'.

Enfin, même si cela n'a pas été représenté, il est noté qu'il est de préférence prévu un ou plusieurs capots de nacelle montés sur la structure rigide 10, et en particulier sur les caissons latéraux 24a, 24b.

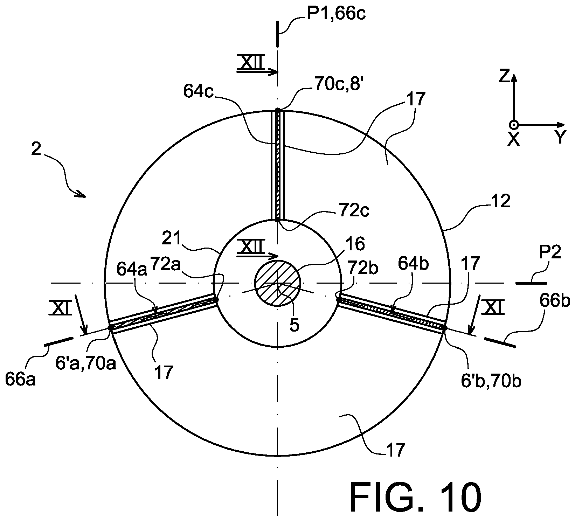

Sur les figures 10 à 12, il a été représenté un autre mode de réalisation préféré de l'invention, dans lequel le turboréacteur intègre de plus des structures de renfort reliant le carter de soufflante au carter central. Sur les figures, le turboréacteur 2 est représenté dans une position telle qu'adoptée lorsqu'il est suspendu sous la voilure. Néanmoins, le mode de réalisation décrit peut s'envisager pour tout positionnement du turboréacteur, notamment lorsqu'il est rapporté en partie arrière de fuselage, tel que cela est montré sur les figures 8 et 9.

Tout d'abord, il est prévu une structure annulaire de transfert d'efforts 60, également appelée jante ou anneau, entourant le carter central 16 et centré sur l'axe 5. Cet anneau 60, espacé radialement du carter central 16, est relié mécaniquement à ce dernier par l'intermédiaire de moyens de montage 62, par exemple du type bielles, tel que cela sera détaillé ci-après. De préférence, cet anneau 60 se situe vers l'arrière du carter central 16, par exemple en aval de la chambre de combustion, et plus préférentiellement au niveau d'un carter inter-turbine en vis-à-vis d'un élément fixe de structure, idéalement à la fin du carter de turbine haute pression. Pour un meilleur support, il se situe préférentiellement au droit d'un palier d'arbre du turboréacteur.

Tout d'abord, il est prévu une structure de renfort formant plan de cisaillement, associée à chacune des première et seconde attaches moteur 6a, 6b.

Ainsi, en ce qui concerne la première attache moteur 6a, une structure de renfort 64a formant plan de cisaillement est agencée dans un plan fictif radial 66a passant par l'axe 5, et passant également par le point d'ancrage 6'a de cette attache 6a.

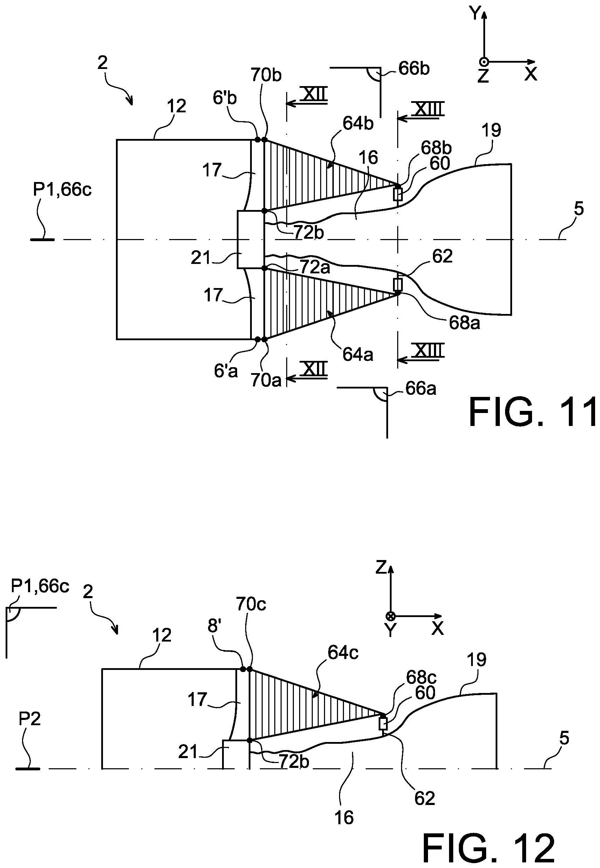

Comme cela est le mieux visible sur la figure 11, la structure 64a prend de préférence une forme plane sensiblement triangulaire, éventuellement trouée pour un gain de masse. Le triangle est raccordé fixement au niveau de l'anneau 60 en un premier point d'ancrage 68a, au niveau du carter de soufflante 12, à proximité du point 6'a situé dans le même plan fictif 66a, en un second point d'ancrage 70a, et au niveau de la jonction entre un bras structural 17 et le carter intermédiaire 21, en un troisième point d'ancrage 72a. Ainsi, la structure triangulaire 64a formant plan de cisaillement présente une base parallèle et longeant le bras structural 17 placé dans le plan fictif 66a, ce dernier étant ici incliné par rapport aux directions Y et Z, en raison du déport de l'attache 6a en dessous du plan diamétral P2.

Le plan fictif 66a, dans lequel s'inscrit la structure de renfort triangulaire 64a, est ici radial, à savoir qu'il passe par l'axe longitudinal 5. Néanmoins, il pourrait être disposé autrement, à savoir être parallèle à l'axe longitudinal 5, sans l'intégrer. Cela est notamment le cas lorsque les bras structuraux ne sont eux-mêmes pas radiaux, mais inclinés dans un plan transversal de manière à ce que leur axe n'intercepte pas l'axe longitudinal 5. Dans une telle configuration, on continue de préférence à faire en sorte que la structure triangulaire 64a présente une base parallèle et longeant le bras structural 17, placé dans le plan fictif 66a. En d'autres termes, on prévoit de préférence que la structure triangulaire 64a se trouve dans le prolongement arrière de l'un des bras structuraux 17, ce bras et la structure 64a étant donc situés dans le même plan fictif 66a. Il est noté que cette spécificité est également applicable pour chacune des autres structures de renfort décrites ci-dessous.

De la même manière, une conception identique ou similaire est adoptée pour la seconde attache 6b. Par conséquent, sur les figures, les références numériques attachées aux éléments en relation avec la structure de renfort 64b formant plan de cisaillement agencée dans un plan fictif radial 66b, portent donc la lettre « b », à la place de la lettre « a » utilisée pour des éléments identiques en lien avec la structure de renfort 64a.

Ainsi, les structures 64a, 64b se retrouvent symétriques par rapport au plan diamétral P1, correspondant également à un autre plan fictif radial 66c, dans lequel se trouve une troisième structure de renfort 64c formant plan de cisaillement, attachée à la troisième attache moteur 8.

Ici aussi, sur les figures, les références numériques attachées aux éléments en relation avec la structure de renfort 64c formant plan de cisaillement agencée dans un plan fictif radial 66c, portent donc la lettre « c », à la place de la lettre « a » utilisée pour des éléments identiques en lien avec la structure de renfort 64a.

Les trois structures 64a, 64b, 64c, de préférence sensiblement identiques, permettent globalement de rigidifier le carter central 16, limitant ainsi sa flexion, même en cas de sollicitations inertielles s'exerçant dans les plans fictifs 66a, 66b, 66c, le dernier correspondant ici au plan vertical. De plus, elles permettent une limitation de la déformation des bras structuraux 17 dans ces plans fictifs et à proximité, entraînant avantageusement une limitation de l'effet d'ovalisation du carter de soufflante 12.

De préférence, les structures 64a, 64b, 64c peuvent chacune jouer le rôle bifurcations de l'air dans le flux secondaire du turboréacteur, ces bifurcations ayant pour principale fonction d'intégrer le passage de systèmes et/ou présentant un traitement acoustique, tout en constituant des surfaces aérodynamiques.

Enfin, pour la conservation d'une reprise d'efforts isostatique, les structures de renfort sont dépourvues de raccordement mécanique direct avec ledit mât, et également avec la nacelle.

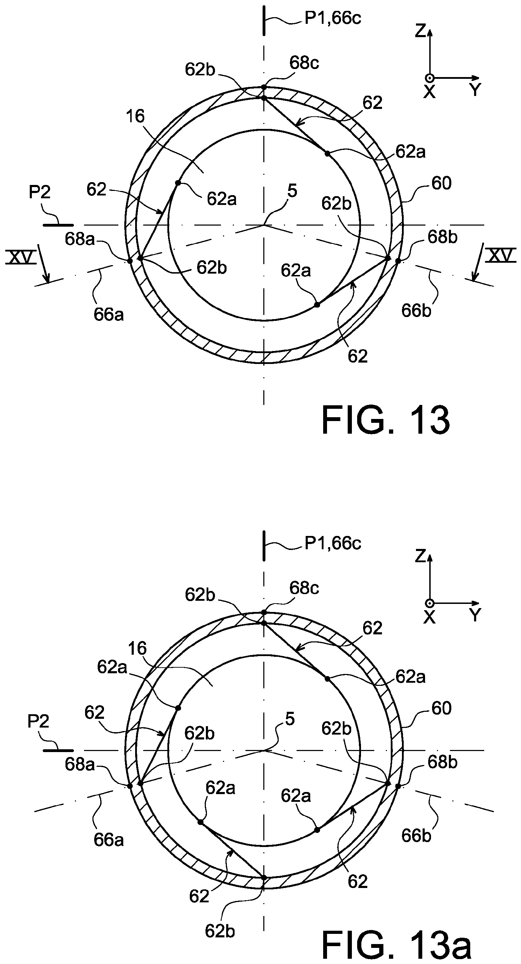

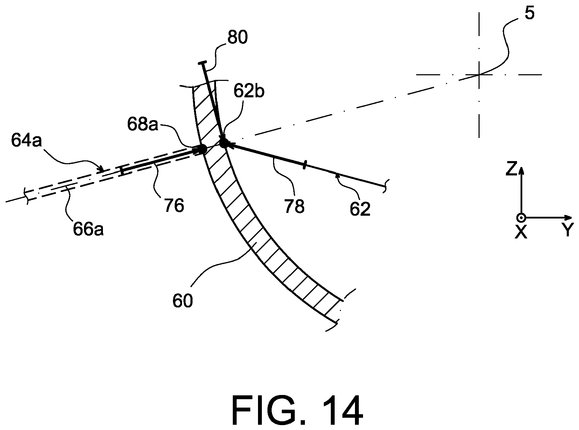

En référence à présent aux figures 13 et 14, on peut voir une manière préférée de réalisation des moyens de montage 62 rapportés entre la structure annulaire de transfert d'efforts 60, et le carter central 16.

Tout d'abord, il est noté que les points d'ancrage 68a, 68b, 68c cités ci-dessus forment chacun un point d'introduction d'efforts dans l'anneau 60, ces points étant répartis circonférentiellement le long de ce dernier. De plus, en raison de l'orientation préférentielle radiale des structures de renfort précitées associées à ces points 68a, 68b, 68c, l'effort sollicitant l'anneau 60 est également orienté radialement, à savoir passant par une direction traversant l'axe 5, sur lequel est centré ce même anneau. Néanmoins, il est rappelé que les structures de renfort pourraient être orientées autrement que radialement, sans sortir du cadre de l'invention.

A chacun de ces trois points 68a, 68b, 68c est associée au moins une bielle de raccordement 62, chaque bielle étant, en vue de face selon l'axe 5 comme sur la figure 13, disposée tangentiellement par rapport au carter central 16. Plus précisément, les bielles 62 sont de préférence toutes disposées sensiblement dans un même plan transversal du turboréacteur.

On prévoit de préférence qu'une bielle unique 62 est issue de chacun des points supérieur 68c et inférieurs 68a, 68b.

Pour chacune de ces bielles 62, il est prévu une extrémité intérieure 62a raccordée de façon rotulée sur le carter central 16, ainsi qu'une extrémité extérieure 62b raccordée de façon rotulée sur l'anneau 60. Plus particulièrement, cette extrémité extérieure 62b est agencée de manière à être traversée, en vue de face, par le plan fictif radial 66a, 66b, 66c passant par l'axe longitudinal 5 et le point d'introduction d'efforts 68a, 68b, 68c concerné. A titre indicatif, il en résulte, d'une manière générale, que pour une attache moteur donnée, le point d'ancrage de l'attache sur le carter de soufflante, le point d'ancrage de la structure de renfort associée sur le carter de soufflante, la structure de renfort elle-même, le point d'introduction d'efforts dans l'anneau formant point d'ancrage de la structure de renfort sur cet anneau, ainsi que l'extrémité extérieure de la bielle associée, sont tous agencés dans un même plan fictif radial, dans lequel se situe donc également préférentiellement l'un des bras structuraux reliant les carters 12 et 16.

La nature rotulée de la fixation des extrémités des bielles 62 permet de gérer au mieux la dilatation thermique du carter central par rapport à la structure annulaire 60 qui l'entoure, et ce à la fois dans la direction radiale et dans la direction longitudinale. En effet, les bielles rotulées positionnées comme décrit ci-dessus sont facilement capables d'accompagner les déformations du carter central dans ces deux directions, lorsque ce dernier se dilate, sans provoquer de contraintes néfastes.

De plus, comme visible sur la figure 13, chacune des trois bielles s'étend dans le même sens circonférentiel à partir de son extrémité extérieure 62b, par exemple le sens horaire comme cela a été représenté. Avec cette configuration, en cas de dilatation thermique différentielle entre l'anneau 60 et le carter 16 ou les bielles 62, l'anneau 60 peut tourner autour du carter central 16 tout en restant coaxial à celui-ci.

En référence plus spécifiquement à la figure 14, il est détaillé la répartition des efforts s'appliquant au niveau du point d'introduction d'efforts 68a, le principe restant analogue pour les deux autres points 68b, 68c.

Au niveau du point d'introduction d'efforts 68a, l'effort 76 provenant de la structure de renfort associée 64a se trouve agencé sensiblement radialement, et plus particulièrement dans le plan fictif radial correspondant 66a. L'effort radial 76 est repris d'une part par un effort de compression ou de traction 78 dans la bielle 62, et d'autre part par un effort 80 nécessairement sensiblement tangentiel, dans l'anneau 60, cet effort étant également dit effort de membrane. De ce fait, au niveau de chacun des trois points d'introduction d'efforts de l'anneau, celui-ci tend à répondre aux sollicitations mécaniques des structures de renfort par un effort sensiblement tangentiel, limitant fortement les risques d'ovalisation.

Sur la figure 13a montrant une alternative de réalisation, il est prévu, en plus des trois bielles 62 décrites ci-dessus en référence à la figure 13, une quatrième bielle 62 judicieusement positionnée.

En effet, pour homogénéiser la répartition des efforts, aux trois bielles 62 issues respectivement des points d'introduction d'efforts 68a, 68b, 68c est associée une quatrième bielle 62 reliant l'anneau 60 au carter 16, cette quatrième bielle étant disposée symétriquement par rapport à celle attachée à la troisième attache moteur, par symétrie centrale de centre constitué par l'axe 5. Ainsi, son extrémité extérieure 62b est également agencée de manière à être traversée, en vue de face, par le plan fictif radial 66c passant par l'axe longitudinal 5 et le point d'introduction d'efforts 68c concerné.

De plus, comme visible sur la figure 13a, chacune des quatre bielles s'étend donc dans le même sens circonférentiel à partir de son extrémité extérieure 62b, par exemple le sens horaire comme cela a été représenté. Ici encore, en cas de dilatation thermique différentielle entre l'anneau 60 et le carter 16 ou les bielles 62, l'anneau 60 peut tourner autour du carter central 16 tout en restant coaxial à celui-ci.

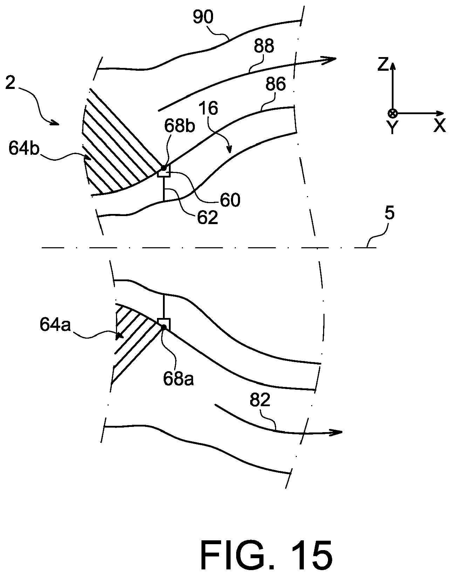

Sur la figure 15 montrant un autre mode de réalisation, les bielles 62 disposées de la manière exposée ci-dessus sont toujours raccordées à l'anneau 60, qui est lui non seulement raccordé aux points d'introduction d'efforts 68a, 68b, 68c, mais également porté par une structure 86 de délimitation radiale interne du canal annulaire de flux secondaire 88 (de l'anglais « IFS », Inlet Fan Structure). A titre indicatif, cette structure 86 est disposée radialement vers l'intérieur par rapport à une structure 90 de délimitation radiale externe du canal annulaire de flux secondaire (de l'anglais « OFS », Outlet Fan Structure), elle-même située dans le prolongement arrière des peaux intérieures des caissons latéraux du mât d'accrochage.

Dans un tel cas, comme évoqué ci-dessus, on peut effectivement prévoir que les structures de renfort 64a, 64b, 64c, cheminant le long de la structure interne 80, jouent un rôle additionnel de bifurcation de l'air dans le flux secondaire du turboréacteur.

Sur les figures 13 à 15, le turboréacteur 2 est représenté dans une position telle qu'adoptée lorsqu'il est suspendu sous la voilure. Néanmoins, ici encore, la configuration particulière des moyens de montage 62, décrite ci-dessus, peut s'envisager pour tout positionnement du turboréacteur, notamment lorsqu'il est rapporté en partie arrière de fuselage, tel que cela est montré sur les figures 8 et 9.

Bien entendu, diverses modifications peuvent être apportées par l'homme du métier à l'ensemble moteur 1 pour aéronef qui vient d'être décrit, uniquement à titre d'exemple non limitatif. A cet égard, il est noté que les deux spécificités facultatives représentées respectivement aux figures 10 à 12 et aux figures 13 à 15 ont été décrites en combinaison, mais qu'elles pourraient être prévues l'une sans l'autre, sans sortir du cadre de l'invention.

## Revendications

1. Ensemble moteur (1) pour aéronef comprenant :
- un turboréacteur (2) comprenant un carter de soufflante (12), un carter intermédiaire (21) situé radialement vers l'intérieur par rapport au carter de soufflante et relié à ce dernier par une pluralité de bras structuraux (17), ainsi qu'un carter central (16) prolongeant ledit carter intermédiaire vers l'arrière ;
- un mât d'accrochage (4) disposant d'une structure rigide (10) comportant un caisson longitudinal (22) ainsi que deux caissons latéraux (24a, 24b) solidaires dudit caisson longitudinal (22) et agencés de part et d'autre de celui-ci, le mât comprenant également des moyens d'accrochage dudit turboréacteur (2) sur la structure rigide (10), lesdits moyens d'accrochage comportant une première, seconde et troisième attaches moteur avant (6a, 6b, 8) de reprise des efforts de poussée rapportées sur le carter de soufflante, et agencées de sorte que ladite troisième attache moteur avant (8) passe par un premier plan diamétral (P1) du turboréacteur, lesdites première et seconde attaches moteur avant (6a, 6b), respectivement rapportées sur les deux caissons latéraux (24a, 24b), étant disposées de part et d'autre de ce premier plan diamétral (P1),
**caractérisé en ce que** lesdites première et seconde attaches moteur avant (6a, 6b) sont rapportées sur le carter de soufflante (12) respectivement en deux points (6'a, 6'b) situés au-delà d'un second plan diamétral (P2) du turboréacteur orthogonal au premier plan diamétral (P1), par rapport à ladite troisième attache moteur avant (8).

2. Ensemble (1) pour aéronef selon la revendication 1, **caractérisé en ce que** lesdites première et seconde attaches moteur avant de reprise des efforts de poussée (6a, 6b) sont situées de façon symétrique par rapport audit premier plan diamétral (P1) défini par un axe longitudinal (5) du turboréacteur parallèle à une direction longitudinale (X) de celui-ci, et une première direction (Z, Z') dudit turboréacteur orthogonale à la direction longitudinale (X).

3. Ensemble (1) pour aéronef selon la revendication 2, **caractérisé en ce qu'**en vue de face prise selon l'axe longitudinal (5) du turboréacteur, un angle (A1) ayant comme centre l'axe longitudinal du turboréacteur, entre les points d'ancrage de la troisième et de la première attache moteur (8', 6'a) est strictement supérieur à 90° et inférieur ou égal à 120°, et de préférence compris entre 90 et 110° non-inclus, et un angle (A2) ayant comme centre l'axe longitudinal du turboréacteur, entre les points d'ancrage de la troisième et de la seconde attache moteur (8', 6'b) est supérieur ou égal à 240° et inférieur strictement à 270°, et de préférence compris entre 250 et 270° non-inclus.

4. Ensemble (1) pour aéronef selon la revendication 2 ou la revendication 3, **caractérisé en ce que** lesdites première et seconde attaches moteur avant (6a, 6b) sont chacune conçues de manière à reprendre des efforts s'exerçant selon la direction longitudinale (X) et selon ladite première direction (Z, Z') du turboréacteur (2), et **en ce que** ladite troisième attache moteur avant (8) est conçue de manière à reprendre des efforts s'exerçant selon la direction longitudinale (X) et selon une seconde direction (Y, Y') du turboréacteur (2), orthogonale à ladite première direction (Z, Z') et à la direction longitudinale (X).

5. Ensemble (1) pour aéronef selon la revendication 4, **caractérisé en ce que** ladite première direction du turboréacteur (2) correspond à une direction verticale (Z) de celui-ci, et **en ce que** ladite seconde direction du turboréacteur (2) correspond à une direction transversale (Y) de celui-ci.

6. Ensemble (1) pour aéronef selon l'une quelconque des revendications précédentes, **caractérisé en ce que** lesdits moyens d'accrochage sont uniquement constitués par lesdites première, seconde et troisième attaches moteur avant (6a, 6b, 8).

7. Ensemble (1) pour aéronef selon l'une quelconque des revendications précédentes, **caractérisé en ce qu'**il comprend en outre une structure annulaire de transfert d'efforts (60) entourant le carter central (16) et relié mécaniquement à ce dernier par l'intermédiaire de moyens de montage (62), et **en ce que** à chacune desdites première et seconde attaches moteur avant (6a, 6b) est associée une structure de renfort (64a, 64b) formant plan de cisaillement, raccordée fixement :
- au niveau de la structure annulaire (60) en un premier point d'ancrage (68a, 68b) ;
- au niveau du carter de soufflante (12) en un second point d'ancrage (70a, 70b) ; et
- au niveau d'un bras structural (17) ou du carter intermédiaire (21) en un troisième point d'ancrage (72a, 72b),
ladite structure (64a, 64b) s'étendant selon un plan fictif (66a, 66b) parallèle à un axe longitudinal (5) dudit turboréacteur ou passant par celui-ci, et passant également par le point d'ancrage (6'a, 6'b) de ladite attache moteur avant (6a, 6b) sur le carter de soufflante (12).

8. Ensemble (1) pour aéronef selon l'une quelconque des revendications précédentes, **caractérisé en ce qu'**il comprend une structure annulaire de reprise d'efforts (60) entourant le carter central (16) et relié mécaniquement à ce dernier par l'intermédiaire de moyens de montage (62) comprenant une pluralité de bielles de raccordement, ladite structure annulaire étant par ailleurs raccordée à une pluralité de structures (64a, 64b, 64c) agencées extérieurement par rapport à celle-ci, et la sollicitant radialement respectivement en une pluralité de points d'introduction d'efforts (68a, 68b, 68c) répartis circonférentiellement sur cette dernière,
et **en ce qu'**au moins une bielle de raccordement (62) est associée à chacun des points d'introduction d'efforts (68a, 68b, 68c), ladite bielle étant, en vue de face selon un axe longitudinal (5) du turboréacteur, disposée tangentiellement par rapport au carter central (16), et présentant une extrémité intérieure (62a) raccordée sur ce carter central, ainsi qu'une extrémité extérieure (62b) raccordée sur ladite structure annulaire (60) de manière à être traversée par un plan fictif radial (66a, 66b, 66c) passant par l'axe longitudinal (5) dudit turboréacteur, et également par ledit point d'introduction d'efforts (68a, 68b, 68c).

9. Aéronef **caractérisé en ce qu'**il comprend au moins un ensemble moteur (1) selon l'une quelconque des revendications précédentes, assemblé sur une aile ou sur une partie arrière de fuselage de cet aéronef.

## Patentansprüche

1. Triebwerk-Anordnung (1) für ein Luftfahrzeug, die enthält:
- ein Turbostrahltriebwerk (2), das ein Gebläsegehäuse (12), ein Zwischengehäuse (21), das sich bezüglich des Gebläsegehäuses radial nach innen befindet und mit diesem letzteren durch eine Vielzahl von Strukturarmen (17) verbunden ist, sowie ein Mittelgehäuse (16) enthält, das das Zwischengehäuse nach hinten verlängert;
- eine Befestigungsstrebe (4), die über eine starre Struktur (10) verfügt, die einen Längskasten (22) sowie zwei Seitenkästen (24a, 24b) aufweist, die fest mit dem Längskasten (22) verbunden und zu beiden Seiten von diesem angeordnet sind, wobei die Strebe ebenfalls Befestigungseinrichtungen des Turbostrahltriebwerks (2) an der starren Struktur (10) enthält, wobei die Befestigungseinrichtungen eine erste, zweite und dritte vordere Triebwerkaufhängung (6a, 6b, 8) zur Aufnahme der Schubkräfte aufweisen, die an das Gebläsegehäuse angefügt und so angeordnet sind, dass die dritte vordere Triebwerkaufhängung (8) durch eine erste diametrale Ebene (P1) des Turbostrahltriebwerks geht, wobei die erste und zweite vordere Triebwerkaufhängung (6a, 6b), die je an die zwei Seitenkästen (24a, 24b) angefügt sind, zu beiden Seiten dieser ersten diametralen Ebene (P1) angeordnet sind,
**dadurch gekennzeichnet, dass** die erste und zweite vordere Triebwerkaufhängung (6a, 6b) an das Gebläsegehäuse (12) je an zwei Punkten (6'a, 6'b) angefügt sind, die sich jenseits einer zweiten diametralen Ebene (P2) des Turbostrahltriebwerks orthogonal zur ersten diametralen Ebene (P1) bezüglich der dritten vorderen Triebwerkaufhängung (8) befinden.

2. Anordnung (1) für ein Luftfahrzeug nach Anspruch 1, **dadurch gekennzeichnet, dass** die erste und zweite vordere Triebwerkaufhängung zur Aufnahme der Schubkräfte (6a, 6b) symmetrisch bezüglich der ersten diametralen Ebene (P1) angeordnet sind, die von einer Längsachse (5) des Turbostrahltriebwerks parallel zu einer Längsrichtung (X) von diesem und einer ersten Richtung (Z, Z') des Turbostrahltriebwerks orthogonal zur Längsrichtung (X) definiert wird.

3. Anordnung (1) für ein Luftfahrzeug nach Anspruch 2, **dadurch gekennzeichnet, dass** in Vorderansicht gemäß der Längsachse (5) des Turbostrahltriebwerks ein Winkel (A1), der als Mitte die Längsachse des Turbostrahltriebwerks hat, zwischen den Verankerungspunkten der dritten und der ersten Triebwerkaufhängung (8', 6'a) strikt größer als 90° und kleiner als oder gleich 120° ist und vorzugsweise zwischen 90 und 110° nicht eingeschlossen liegt, und ein Winkel (A2), der als Mitte die Längsachse des Turbostrahltriebwerks hat, zwischen den Verankerungspunkten der dritten und der zweiten Triebwerkaufhängung (8', 6'b) größer als oder gleich 240° und strikt kleiner als 270° ist, und vorzugsweise zwischen 250 und 270° nicht eingeschlossen liegt.

4. Anordnung (1) für ein Luftfahrzeug nach Anspruch 2 oder Anspruch 3, **dadurch gekennzeichnet, dass** die erste und die zweite vordere Triebwerkaufhängung (6a, 6b) je so konzipiert sind, dass sie Kräfte aufnehmen, die gemäß der Längsrichtung (X) und gemäß der ersten Richtung (Z, Z') des Turbostrahltriebwerks (2) ausgeübt werden, und dass die dritte vordere Triebwerkaufhängung (8) so konzipiert ist, dass sie Kräfte aufnimmt, die gemäß der Längsrichtung (X) und gemäß einer zweiten Richtung (Y, Y') des Turbostrahltriebwerks (2) orthogonal zur ersten Richtung (Z, Z') und zur Längsrichtung (X) ausgeübt werden.

5. Anordnung (1) für ein Luftfahrzeug nach Anspruch 4, **dadurch gekennzeichnet, dass** die erste Richtung des Turbostrahltriebwerks (2) einer senkrechten Richtung (Z) von diesem entspricht, und dass die zweite Richtung des Turbostrahltriebwerks (2) einer Querrichtung (Y) von diesem entspricht.

6. Anordnung (1) für ein Luftfahrzeug nach einem der vorhergehenden Ansprüche, **dadurch gekennzeichnet, dass** die Befestigungseinrichtungen nur aus den ersten, zweiten und dritten vorderen Triebwerkaufhängungen (6a, 6b, 8) bestehen.

7. Anordnung (1) für ein Luftfahrzeug nach einem der vorhergehenden Ansprüche, **dadurch gekennzeichnet, dass** sie außerdem eine ringförmige Struktur zur Kraftübertragung (60) enthält, die das Mittelgehäuse (16) umgibt und mechanisch mit diesem letzteren über Montageeinrichtungen (62) verbunden ist, und dass jeder dieser ersten und zweiten vorderen Triebwerkaufhängungen, (6a, 6b) eine eine Scherebene bildende Verstärkungsstruktur (64a, 64b) zugeordnet ist, die ortsfest angeschlossen ist:
- im Bereich der ringförmigen Struktur (60) an einen ersten Verankerungspunkt (68a, 68b);
- im Bereich des Gebläsegehäuses (12) an einen zweiten Verankerungspunkt (70a, 70b); und
- im Bereich eines Strukturarms (17) oder des Zwischengehäuses (21) an einen dritten Verankerungspunkt (72a, 72b),
wobei die Struktur (64a, 64b) sich gemäß einer fiktiven Ebene (66a, 66b) parallel zu einer Längsachse (5) des Turbostrahltriebwerks erstreckt oder durch diese verläuft, und ebenfalls durch den Verankerungspunkt (6'a, 6'b) der vorderen Triebwerkaufhängung (6a, 6b) am Gebläsegehäuse (12) verläuft.

8. Anordnung (1) für ein Luftfahrzeug nach einem der vorhergehenden Ansprüche, **dadurch gekennzeichnet, dass** sie eine ringförmige Struktur zur Aufnahme von Kräften (60) enthält, die das Mittelgehäuse (16) umgibt und mechanisch mit diesem letzteren mittels Montageeinrichtungen (62) verbunden ist, die eine Vielzahl von Anschlussstangen enthalten, wobei die ringförmige Struktur außerdem an eine Vielzahl von Strukturen (64a, 64b, 64c) angeschlossen ist, die außen bezüglich dieser angeordnet sind und sie radial an einer Vielzahl von Krafteinführpunkten (68a, 68b, 68c) beanspruchen, die an ihrem Umfang auf ihr verteilt sind,
und dass mindestens eine Anschlussstange (62) jedem der Krafteinführpunkte (68a, 68b, 68c) zugeordnet ist, wobei die Stange in Vorderansicht gemäß einer Längsachse (5) des Turbostrahltriebwerks tangential bezüglich des Mittelgehäuses (16) angeordnet ist und ein inneres Ende (62a), das an dieses Mittelgehäuse angeschlossen ist, sowie ein äußeres Ende (62b) aufweist, das an die ringförmige Struktur (60) so angeschlossen ist, dass es von einer radialen fiktiven Ebene (66a, 66b, 66c) durchquert wird, die durch die Längsachse (5) des Turbostrahltriebwerks und ebenfalls durch den Krafteinführpunkt (68a, 68b, 68c) geht.

9. Luftfahrzeug **dadurch gekennzeichnet, dass** es mindestens eine Triebwerk-Anordnung (1) nach einem der vorhergehenden Ansprüche enthält, montiert auf einen Flügel oder einen hinteren Bereich des Rumpfs dieses Luftfahrzeugs.

## Claims

1. Aircraft engine assembly (1) comprising:
- a turbojet (2) comprising a fan frame (12), an intermediate casing (21) radially situated to the interior with respect to the fan frame and linked to the latter by a plurality of structural arms (17), as well as a central casing (16) extending said intermediate casing towards the rear;
- a mounting strut (4) having of a rigid structure (10) comprising a longitudinal box (22) as well as two lateral boxes (24a, 24b) integrated with said longitudinal box (22) and arranged on one side and another of same, the strut also comprising means of mounting of said turbojet (2) onto the rigid structure (10), said means of mounting comprising first, second and third forward engine attachments (6a, 6b, 8) to take up the thrust loads brought to the fan frame, and arranged such that said third forward engine attachment (8) passes through the first diametrical plane (P1) of the turbojet, said first and second forward engine attachments (6a, 6b), respectively carried on the two lateral boxes (24a, 24b), being arranged on one side and another in this first diametrical plane (P1), **characterized in that** said first and second forward engine attachments (6a, 6b)are respectively brought to the fan frame (12) at two points (6'a, 6'b), situated beyond the second diametrical plane(P2) of the turbojet, orthogonal to the first diametrical plane (P1), with respect to said third forward engine attachment (8).

2. Assembly (1) for aircraft according to claim 1, **characterized in that**, said first and second forward engine attachments for taking up the thrust loads (6a, 6b), are situated symmetrically with respect to said first diametrical plane (P1) defined by the longitudinal axis (5) of the turbojet parallel to a longitudinal direction (X) of same, and a first direction (Z, Z') of said turbojet orthogonal to said longitudinal direction (X).

3. Assembly (1) for aircraft according to claim 2, **characterized in that** in a head-on view along the longitudinal axis (5) of the turbojet, an angle (A1) having as center the longitudinal axis of the turbojet, between the anchoring points of the third and first engine attachment (8', 6'a), strictly greater than 90° and less than or equal to 120°, and preferably comprised between but not including, 90 and 110°, and an angle (A2) having as center the longitudinal axis of the turbojet, between the anchoring points of the third and second engine attachment (8', 6'b), greater or equal to 240° and strictly less than 270°, and preferably comprised between but not including, 250 and 270°.

4. Assembly (1) for aircraft according to claim 2 or claim 3, **characterized in that** said first and second forward engine attachments (6a, 6b) are each designed for taking up the loads exerting along the longitudinal direction (X) and along said first direction (Z, Z') of the turbojet (2), and **in that** said third forward engine attachment (8) is designed for taking up the loads exerting along the longitudinal direction (X) and along a second direction (Y, Y') of the turbojet (2), orthogonal to said first direction (Z, Z') and to the longitudinal direction (X).

5. Assembly (1) for aircraft according to claim 4, **characterized in that** said first direction of the turbojet (2) corresponds to a vertical direction (Z) of same, and **in that** said second direction of the turbojet (2) corresponds to a transverse direction (Y) of same.

6. Assembly (1) for aircraft according to any of the previous claims, **characterized in that** said means of attaching are uniquely constituted by said first, second and third forward engine attachments (6a, 6b, 8).

7. Assembly (1) for aircraft according to any of the previous claims, **characterized in that** the engine assembly comprises, in addition, an annular structure for transferring loads (60) around the central casing (16) and linked mechanically to the latter via means of mounting (62), and, **in that** to each of said first and second forward engine attachments (6a, 6b) is associated a reinforcing structure (64a, 64b) forming a shearing plane, rigidly attached:
- at the level of the annular structure (60) in a first anchoring point (68a, 68b);
- at the level of the fan frame (12) and in a second anchoring point (70a, 70b); and
- at the level of the structural arm (17) or of the intermediate casing (21) in a third anchoring point (72a, 72b), said structure (64a, 64b) lying along an imaginary plane (66a, 66b), parallel to a longitudinal axis (5) of said turbojet or passing through said plane, and equally passing through the anchoring point (6'a, 6'b) of said forward engine attachment (6a, 6b) on the fan frame (12).

8. Assembly (1) for aircraft according to any of the previous claims, **characterized in that** same comprises an annular structure for taking up loads (60) surrounding the central casing (16) and linked mechanically to the latter via means of mounting (62) comprising a plurality of attaching struts, said annular structure being, in addition, attached to a plurality of structures (64a, 64b, 64c) arranged externally with respect to said annular structure and radially stressing respectively in a plurality of load introduction points (68a, 68b, 68c) spread circumferentially on the latter, and **in that**, at least one linking strut (62) is associated to each of the load introduction points (68a, 68b, 68c), said strut being, in a head-on view along a longitudinal axis (5) of the turbojet, disposed tangentially with respect to the central casing (16), and having an innner end (62a) attached to the central casing, as well as an outer end (62b) attached to said annular structure (60) so as to be crossed by an imaginary radial plane (66a, 66b, 66c) passing through the longitudinal axis (5) of said turbojet, and also through said load introduction point (68a, 68b, 68c).

9. Aircraft **characterized in that** it comprises at least one engine assembly (1) according to any of the previous claims, assembled on a wing or on a part of the aft fuselage of said aircraft.
